Europäisches Patentamt

(19) European Patent Office

Office européen des brevets

(11) Numéro de publication: **0 224 393**
**B1**

(12) # FASCICULE DE BREVET EUROPÉEN

(45) Date de publication du fascicule du brevet:
27.12.89

(51) Int. Cl.⁴: **F 16 D   23/14**

(21) Numéro de dépôt: 86402201.7

(22) Date de dépôt: 06.10.86

(54) **Montage de butée de débrayage réversible à organe de découplage sur la butée de débrayage, notamment pour véhicule automobile.**

(30) Priorité: 09.10.85  FR 8514934

(43) Date de publication de la demande:
03.06.87 Bulletin 87/23

(45) Mention de la délivrance du brevet:
27.12.89 Bulletin 89/52

(84) Etats contractants désignés:
DE ES FR GB IT

(56) Documents cité:
EP-A-0 164 871
FR-A-2 304 826
FR-A-2 557 234
FR-A-2 588 051
GB-A-2 062 799

(73) Titulaire: **VALEO, 64 Avenue de la Grande Armée,
F-75017 Paris (FR)**

(72) Inventeur: **Gay, Christian, 36 Rue Labat, F-75018
Paris (FR)**
Inventeur: **Lassiaz, Philippe, 19 Rue Thiers, F-92100
Boulogne (FR)**

(74) Mandataire: **CABINET BONNET- THIRION, 95
Boulevard Beaumarchais, F-75003 Paris (FR)**

LIBER, STOCKHOLM 1989

## Description

La présente invention concerne d'une manière générale les butées de débrayage, notamment pour véhicule automobile.

Elle vise plus particulièrement celles de ces butées de débrayage qui, dites tirées, sont destinées à agir en traction sur le dispositif débrayeur de l'embrayage à commander, et qui, pour ce faire, sont attelées à celui-ci.

Il a été proposé, à cet effet, dans certains montages de butée de débrayage, et c'est le cas, notamment, tant dans le montage de butée de débrayage décrit dans le brevet français publié sous le No 2 304 826 que dans celui décrit dans le brevet français publié sous le No 2 557 234, de mettre en oeuvre, entre la butée de débrayage et le dispositif débrayeur à commander, pour l'attelage de cette butée de débrayage à ce dispositif débrayeur, une pièce, dite ici par simple commodité "pièce d'accostage", ou "pièce d'action", qui, convenablement rapportée sur ledit dispositif débrayeur, comporte radialement, du côté de celui-ci opposé à la butée de débrayage, une collerette d'appui par laquelle elle est apte à agir sur lui, en coopération avec des moyens de solidarisation en traction, qui, établis entre une telle pièce d'accostage et une pièce, dite ici par simple commodité "pièce d'attaque", appartenant à la butée de débrayage, sont propres à assurer une liaison axiale entre lesdites pièces dans le sens axial allant du dispositif débrayeur à la butée de débrayage.

En pratique, dans les brevets français mentionnés ci-dessus, les moyens de solidarisation en traction mis en oeuvre comportent, d'une manière générale, d'une part, un organe de couplage annulaire élastiquement déformable radialement, par exemple un simple jonc, qui est au moins partiellement engagé radialement dans une gorge annulaire de retenue ménagée pour lui sur l'une quelconque des pièces à solidariser en traction, et, d'autre part, une portée d'entraînement, qui est ménagée globalement transversalement sur l'autre de ces pièces, et avec laquelle ledit organe de couplage coopère axialement en appui dans le sens axial correspondant à la liaison axiale recherchée.

Une telle disposition a notamment pour avantage de permettre d'équiper par avance de la pièce d'accostage le dispositif débrayeur de l'embrayage à commander, avant même l'assemblage du mécanisme d'embrayage correspondant, et d'assurer ensuite, lors de l'assemblage de l'ensemble, la venue en prise par simple encliquetage de la butée de débrayage avec ladite pièce d'accostage, et donc avec ledit dispositif débrayeur.

Si le couplage recherché entre la butée de débrayage et le dispositif débrayeur de l'embrayage à commander se trouve ainsi très aisément assuré, il n'en est pas de même, sans autre, pour le processus inverse, c'est-à-dire pour le processus nécessaire pour assurer un découplage entre cette butée de débrayage et ce dispositif débrayeur.

Sans autre, il faut en effet normalement procéder au préalable au démontage de l'embrayage, pour avoir accès de l'avant, c'est-à-dire du côté du dispositif débrayeur, sur l'organe de couplage, et être ainsi en mesure d'en provoquer l'effacement élastique nécessaire au découplage recherché.

Pour pallier cette difficulté, il a été proposé, dans le brevet français No 2 557 234 mentionné ci-dessus, de mettre en oeuvre, pour la délimitation de la gorge de retenue, une pièce mobile, en pratique en forme de douille, dite pièce de désolidarisation, qui est normalement axialement à distance de l'organe de couplage et qu'il suffit de déplacer axialement en direction de cet organe de couplage pour le chasser hors de ladite gorge de retenue et ainsi assurer le découplage recherché.

Bien que donnant satisfaction, une telle disposition présente des difficultés.

En particulier, un outil est nécessaire pour la manoeuvre de la pièce de désolidarisation, ce qui rend relativement malaisée cette manoeuvre.

Dans la demande de brevet européen publiée sous le No 0 110 602, il est décrit une disposition dont il résulte au contraire, que, tant pour le découplage que pour le couplage, il suffit d'appliquer un mouvement axial relatif approprié à la butée de débrayage par rapport au dispositif débrayeur de l'embrayage à commander, le mouvement axial ainsi à appliquer à cette butée de débrayage pouvant très simplement lui être imprimé, en aveugle, à l'aide de l'organe de commande, en pratique une fourchette de débrayage, qui lui est usuellement associé.

Suivant cette disposition, il est associé à l'organe de couplage un organe annulaire de découplage, qui est mis en place par avance sur celle des pièces à solidariser en traction qui comporte la portée d'entraînement, à distance de celle-ci, et avec lequel, en réponse à un mouvement axial suffisant de la butée de débrayage dans le sens axialement tourné en direction opposée à ladite portée d'entraînement, peut venir en prise ledit organe de couplage, moyennant une mise sous contrainte de celui-ci.

L'organe de couplage étant ainsi mis sous contrainte par l'organe de découplage, il entraîne avec lui ce dernier si la butée de débrayage est à nouveau l'objet d'un déplacement axial dans le sens axial tourné vers la portée d'entraînement, mais, du fait même de sa mise sous contrainte, il échappe alors à cette portée d'entraînement, ce qui conduit effectivement au découplage recherché.

Mais, dans le même mouvement, entraîné qu'il est par l'organe de couplage, l'organe de découplage échappe lui-même alors à la pièce qu'il équipait initialement, et tout nouveau couplage est impossible, sauf à désolidariser au préalable l'organe de découplage de l'organe de couplage, et à remettre à leur place initiale l'un et l'autre de ces organes, ou tous nouveaux organes neufs propres à leur être substitués, ce qui

relève en pratique d'opérations particulièrement malaisées à conduire.

Or, sur les chaînes de montage des véhicules concernés, il peut au contraire être avantageux de pouvoir procéder à un nouveau couplage après un découplage.

En effet, après le couplage de la butée de débrayage sur le dispositif débrayeur de l'embrayage à équiper, d'autres opérations de montage sont à assurer sur de telles chaînes de montage, et, par exemple, le branchement du câble d'embrayage propre à la commande de l'ensemble, et, au cours de telles opérations, une action fortuite sur la fourchette de débrayage peut entraîner de manière intempestive un découplage de la butée de débrayage.

Dans la demande de brevet français publiée sous le No 2 588 051, il a été proposé une disposition permettant de manière particulièrement simple et avantageuse de procéder de façon réversible à un couplage et/ou à un découplage.

Suivant cette disposition, il est associé à l'organe de couplage un organe annulaire de découplage, comme précédemment, mais cet organe de découplage est monté mobile axialement dans une gorge à laquelle il ne peut échapper.

En pratique, cette gorge est ménagée dans celle des pièces à solidariser en traction qui comporte la portée d'entraînement, et ladite portée d'entraînement appartient à l'un de ses flancs.

Conjointement, l'organe de découplage se trouve présenter un portée tronconique qui va en s'écartant radialement du fond de la gorge dans laquelle il est disposé, en direction de la portée d'entraînement, et dont la circonférence axialement la plus proche de ladite portée d'entraînement est au moins à niveau avec la circonférence formant le bord libre de celle-ci.

Lorsqu'un découplage est recherché, il suffit, comme précédemment, d'agir sur la butée de débrayage de manière à ce que l'organe de couplage vienne en prise avec l'organe de découplage.

Mais, cette venue en prise de l'organe de couplage avec l'organe de découplage se fait par la portée tronconique de ce dernier, en sorte que, lorsque, pour le découplage recherché, la butée de débrayage est à nouveau déplacée axialement dans le sens axial tourné vers la portée d'entraînement, l'organe de découplage, qui vient en butée contre cette dernière provoque, par sa dite portée tronconique, et tout en restant en place au sein de la pièce qu'il équipe, une déformation momentanée de l'organe de couplage suffisante pour que celui-ci puisse échapper tant à cet organe de découplage qu'à ladite portée d'entraînement, et, par là, à la pièce comportant cette portée d'entraînement.

L'organe de découplage étant demeuré en place, un nouveau couplage est possible.

Mais, en pratique, la disposition ainsi décrite dans la demande de brevet français No 2.588.051 en question ne convient qu'au cas où l'organe de couplage est du type d'un de ceux décrits dans le brevet français No 2.304.826 également mentionné ci-dessus, c'est-à-dire au cas où cet organe de couplage comporte une rondelle globalement tronconique, qui, par l'une de ses périphéries, est engagée dans la gorge de retenue associée, et qui présente, le long de son autre périphérie, d'une part, sensiblement dans son prolongement, des pattes par lequelles elle est adaptée à coopérer axialement en appui avec la portée d'entraînement, et, d'autre part, des pattes, qui, faisant un angle avec les précédentes, sont elles aussi engagées dans la gorge de retenue, du côté opposé à la rondelle globalement tronconique dont elles sont issues.

Elle ne convient pas, ou moins bien, au cas où l'organe de couplage est un simple jonc, c'est-à-dire au cas où cet organe de couplage se présente sous la forme d'un tore, et, par exemple, sous la forme d'un tore de section transversale circulaire.

Il en est d'autant plus ainsi que, suivant cette disposition, il y a un simple contact d'appui entre l'organe de couplage et l'organe de découplage lorsque ces deux organes sont en prise l'un avec l'autre.

Or, avant que l'organe de découplage vienne en butée contre la portée d'entraînement, ce qui est nécessaire pour que, ainsi arrêté, il puisse ensuite assurer la déformation recherchée, de l'organe de couplage, il doit lui-même être entraîné par cet organe de couplage en direction de cette portée d'entraînement.

Si, comme en l'espèce, l'organe de découplage présente une arête par laquelle il vient en prise avec l'organe de découplage, l'entraînement préalable dont il doit ainsi être l'objet peut être assuré à coup sûr.

Il n'en est pas nécessairement de même lorsqu'il s'agit d'un simple jonc, en raison du contour arrondi de la surface par laquelle il porte alors sur l'organe de découplage.

De même, dans la demande de brevet français No 2 588 051, aucune disposition particulière n'est prise pour que, au couplage, l'organe de découplage soit axialement refoulé en direction opposée à la portée d'entraînement et ne gêne ainsi pas la venue en prise de l'organe de couplage avec cette portée d'entraînement.

Il peut en résulter une certaine incertitude pour le fonctionnement des pièces en cause lors d'un tel couplage, et notamment un certain retard dans l'exécution effective de ce couplage, celui-ci pouvant alors exiger plusieurs manoeuvres de la butée de débrayage, sauf si, comme cela est le cas en l'espèce, l'organe de couplage est d'un type particulier, propre à assurer à tout coup l'entraînement nécessaire de l'organe de découplage.

Si, par ailleurs, il est prévu, dans cette demande de brevet français No 2 588 051, que l'organe de couplage puisse être indifféremment porté par la pièce d'attaque de la butée de débrayage ou par la pièce d'accostage, l'organe de découplage étant corollairement porté soit par cette pièce d'accostage soit par cette pièce d'attaque, il est apparu, depuis lors, que la disposition suivant laquelle c'est la pièce d'attaque de la butée de débrayage qui porte l'organe de découplage est particulièrement avantageuse.

Par exemple, il est possible, les conditions étant égales par ailleurs, de donner à l'organe de découplage une extension axiale plus grande, parce que la place disponible axialement sur la pièce d'attaque de la butée de débrayage est usuellement plus importante que celle disponible sur la pièce d'accostage, cette pièce d'accostage n'ayant en pratique par elle-même qu'une extension axiale relativement réduite.

Compte tenu de son extension axiale plus étendue, l'organe de découplage connaît de meilleures conditions de coulissement sur la pièce qui le porte, ce qui minimise le risque de le voir intempestivement s'arc-bouter sur celle-ci.

L'augmentation de l'extension axiale de cet organe de découplage ne se fait en pratique pas au prix d'une augmentation du développement axial correspondant de la pièce d'attaque et donc au prix d'une augmentation de l'encombrement axial de l'ensemble, cette pièce d'attaque présentant déjà par elle-même, une longueur axiale suffisante, compte tenu de la course d'engagement qui doit être la sienne au couplage par rapport à la pièce d'accostage, et ceci d'autant plus que, par mesure de sécurité, cette course est usuellement augmentée d'une surcourse, et qu'une telle surcourse est aussi nécessaire au découplage.

De surcroît, pour donner à l'organe de découplage l'extension axiale souhaitée, il peut aussi être tiré profit de l'espace libre existant usuellement radialement entre la pièce d'attaque de la butée de débrayage et les moyens d'attelage, par exemple un capot, assujettissant axialement, au sein de celle-ci, l'élément d'attaque auquel appartient cette pièce d'attaque à l'élément de manoeuvre propre à la commande de l'ensemble.

Un autre avantage de la disposition à organe de découplage porté par la butée de débrayage est que, le dégagement qui est à ménager radialement sur la pièce d'attaque correspondante pour l'intervention de l'organe de couplage, et qui, en pratique, est formé par la gorge prévue sur cette pièce d'attaque pour l'organe de découplage, est largement moindre que celui à y ménager lorsqu'elle doit au contraire porter cet organe de couplage, puisque, alors, celui-ci doit pouvoir de plus s'y escamoter dans sa quasi totalité.

Dans le premier cas, en effet, ce dégagement est de l'ordre de la moitié de l'épaisseur radiale de l'orange de couplage, et, dans le second cas, il est de l'ordre de la quasi totalité de cette épaisseur.

Ainsi donc, et les conditions étant égales par ailleurs, la pièce d'attaque de la butée de débrayage peut avoir un diamètre plus réduit, et, cette pièce d'attaque étant en pratique formée par l'une des bagues d'un roulement à billes, il en résulte une économie non négligeable, un roulement à billes étant usuellement d'autant moins cher que son diamètre moyen est plus petit.

Enfin, avec la disposition à organe de découplage porté par la pièce d'attaque de la butée de débrayage, la mise en place de cet organe de découplage sur cette pièce d'attaque peut avantageusement se faire indifféremment soit par simple élasticité soit en tirant profit d'une fente qui y est prévue radialement à cet effet, puisque cette mise en place implique une augmentation momentanée du diamètre de cet organe de découplage, et non pas sa rétraction. Dès lors, les dispositions peuvent avantageusement être telles que, lorsqu'il est ainsi en place sur la pièce d'attaque de la butée de débrayage, l'organe de découplage ménage entre lui et celle-ci un jeu annulaire favorable à son bon coulissement, et donc à un bon fonctionnement de l'ensemble, sans risque de voir ce jeu amenuisé ou annulé sous la sollicitation de rétraction radiale dont est l'objet l'organe de découplage de la part de l'organe de couplage lorsqu'il est en prise avec celui-ci. Par exemple, lorsque cet organe de découplage est ouvert radialement par une fente, il suffit, pour ce faire, que, lorsqu'il est en place sur la pièce d'attaque de la butée de débrayage, les deux lèvres de sa fente soient au contact l'une de l'autre.

La présente invention a d'une manière générale pour objet un montage de butée de débrayage relevant avantageusement d'une telle disposition à organe de découplage porté par la pièce d'attaque de la butée de débrayage et avantageusement exempt des inconvénients succinctement exposés précédemment.

De manière plus précise, elle a pour objet un montage de butée de débrayage du genre comportant, pour l'attelage d'une butée de débrayage au dispositif débrayeur d'un embrayage, une pièce, dite par commodité pièce d'accostage, qui est convenablement rapportée sur ledit dispositif débrayeur, et des moyens de solidarisation en traction, qui, établis entre la pièce d'accostage et une pièce, dite par commodité pièce d'attaque, appartenant à la butée de débrayage, sont propres à assurer une liaison axiale entre lesdites pièces dans le sens axial allant du dispositif débrayeur à ladite butée de débrayage, lesdits moyens de solidarisation en traction comportant, d'une part, un organe annulaire de couplage, élastiquement déformable radialement, qui est au moins partiellement engagé radialement dans une gorge annulaire de retenue ménagée pour lui sur l'une quelconque desdites pièces, et, d'autre part, une portée d'entraînement, qui est ménagée globalement transversalement sur l'autre de celles-ci, et avec laquelle ledit organe de couplage est apte à coopérer axialement en appui dans le sens axial considéré, et du genre comportant également, pour le découplage de la butée de débrayage par rapport au dispositif débrayeur de l'embrayage concerné, un organe annulaire de découplage monté mobile axialement dans une gorge, qui est ménagée pour lui sur celle des pièces comportant la portée d'entraînement, et dont ladite portée d'entraînement appartient à l'un des flancs, ce montage de butée de débrayage étant d'une manière générale caractérisé en ce que, l'organe de couplage étant porté par la pièce d'accostage, et l'organe de découplage par la pièce d'attaque, ledit organe de découplage comporte des moyens d'engagement propres à en permettre l'accouplement débrayable avec ledit organe de couplage, au moins pour le sens axial allant du dispositif débrayeur à la butée de débrayage, c'est-à-dire des moyens impliquant un certain emboîtement relatif entre l'organe de couplage et l'organe de découplage lorsque ces organes sont en prise l'un avec l'autre.

Par moyens d'engagement, on entend ici des moyens impliquant un certain emboîtement relatif entre l'organe de couplage et l'organe de découplage lorsque ces organes sont en prise l'un avec l'autre, à la différence d'un simple appui entre de tels organes comme dans la demande de brevet français No 2 588 051 mentionnée ci-dessus.

Il en résulte avantageusement, au découplage, une grande sûreté de fonctionnement dans l'entraînement de l'organe de découplage par l'organe de couplage nécessaire à un tel découplage, même si l'organe de couplage est un simple jonc, étant entendu que, si l'objet de la présente demande est plus particulièrement destiné au cas où l'organe de couplage est ainsi formé par un simple jonc, cela n'est pas une nécessité.

Par exemple, les moyens d'engagement suivant l'invention peuvent être formés par une rainure que comporte annulairement l'organe de découplage sur sa périphérie externe, cette rainure ayant un profil au moins en partie complémentaire de celui de l'organe de couplage.

Mais, suivant une forme préférée de réalisation, ils sont formés par au moins une languette, dite ici par simple commodité languette d'entraînement, que l'organe de découplage présente axialement, et qui est élastiquement déformable radialement, avec, au repos, une extrémité libre qui fait saillie sur la périphérie externe de cet organe de découplage, cette languette d'entraînement ayant, elle-même, axialement, au voisinage de son extrémité libre, un profil au moins en partie complémentaire de celui de l'organe de couplage.

Une telle languette d'entraînement a alors, avantageusement, une double fonction:

D'une part, au découplage, elle assure, comme recherché, l'entraînement de l'organe de couplage par l'organe de découplage; et, d'autre part, au couplage, elle assure un positionnement convenable de l'organe de découplage dans la gorge dans laquelle il est disposé, en venant, pour ce faire, coopérer momentanément en butée avec la tranche correspondante de la pièce d'accostage.

Bien entendu, et dans le même but, une telle languette d'entraînement peut également être prévue dans le cas où les moyens d'engagement suivant l'invention comportent une rainure.

Mais, dans ce cas, elle s'étend avantageusement axialement à distance de cette rainure, pour ne pas interférer avec elle, et éviter que l'organe de couplage ne soit ainsi sollicité à y échapper.

Les caractéristiques et avantages de l'invention ressortiront d'ailleurs de la description qui va suivre, à titre d'exemple, en référence aux dessins schématiques annexés sur lesquels:

la figure 1 est une vue partielle en coupe axiale d'un montage de butée de débrayage suivant l'invention;

la figure 2 reprend, à échelle supérieure, le détail de la figure 1 repéré par un encart II sur celle-ci;

la figure 3 est, à échelle différente, une vue en perspective du seul organe de découplage mis en oeuvre dans ce montage de butée de débrayage, représenté isolément;

les figures 4A, 4B, 4C, 4D, 4E, 4F sont des vues qui, reprenant celle de la figure 2, illustrent le couplage de la butée de débrayage concernée avec la pièce d'accostage portée par le dispositif débrayeur de l'embrayage à commander;

les figures 5A, 5B, 5C, 5D, 5E sont des vues qui, reprenant également celle de la figure 2, illustrent au contraire le découplage de cette butée de débrayage par rapport à cette pièce d'accostage;

les figures 6, 7, sont des vues partielles en coupe axiale analogues, elles aussi, à celle de la figure 2, et se rapportant chacune respectivement à une variante de réalisation.

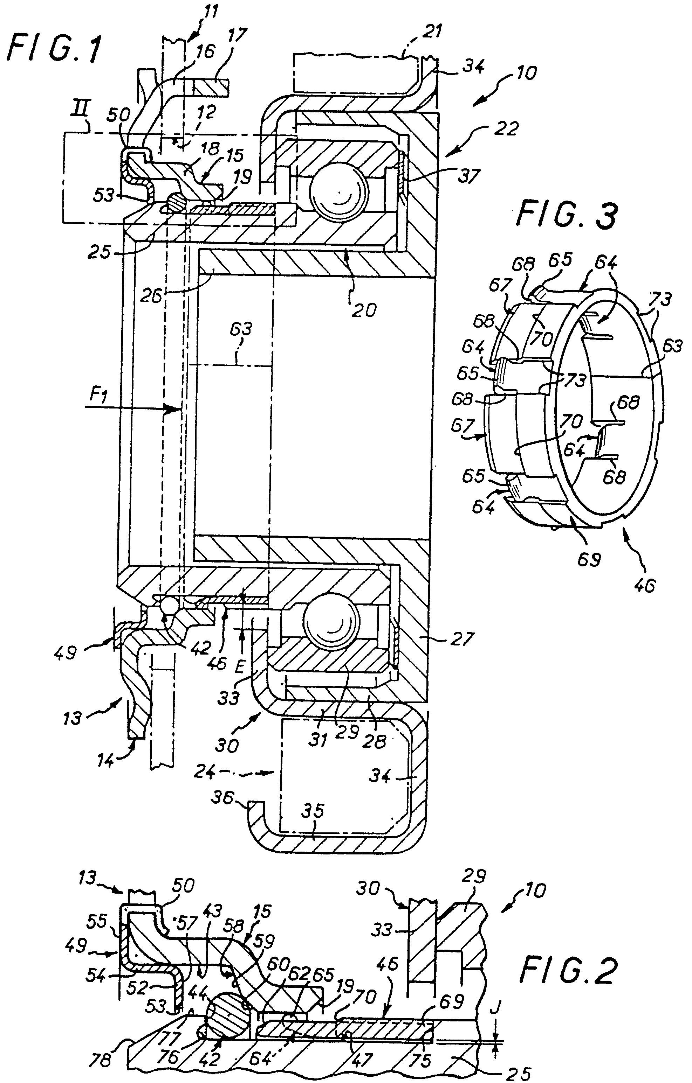

Tel qu'illustré par la figure 1, il s'agit d'atteler une butée de débrayage 10 au dispositif débrayeur 11 d'un quelconque embrayage à commander.

Dans les formes de réalisation représentées, le dispositif débrayeur 11, qui n'a été que schématisé, en traits interrompus sur la figure 1, est, de manière connue en soi, formé par l'extrémité des doigts radiaux d'un diaphragme, c'est-à-dire d'une pièce annulaire, qui, appartenant à l'embrayage à commander, comporte une partie périphérique circulairement continue, formant rondelle Belleville, pour sollicitation en engagement de cet embrayage, et une partie centrale fragmentée en doigts radiaux par des fentes, à savoir les doigts radiaux en question, pour constitution de leviers propres à sa commande en dégagement.

De manière également connue en soi, pour l'attelage de la butée de débrayage 10 au dispositif débrayeur 11, nécessaire à une action en traction de cette butée de débrayage 10 sur ce dispositif débrayeur 11, il est rapporté sur ce dernier, à la faveur de son ouverture centrale 12, une pièce 13, dite ici par commodité pièce d'accostage.

Dans les formes de réalisation représentées, cette pièce d'accostage 13, ou pièce d'action, est du type de celle décrite dans la demande de brevet français publiée sous le No 2 544 036.

Une telle pièce d'accostage ne faisant pas partie de la présente invention, elle ne sera pas décrite en détail ici.

Il suffira d'indiquer que, du côté du dispositif débrayeur 11 opposé à la butée de débrayage 10, elle comporte radialement une collerette 14, dite collerette d'appui, pour action sur un tel dispositif débrayeur 11, ladite collerette d'appui étant convenablement profilée à cet effet, et que, d'un seul tenant avec cette collerette d'appui 14, elle comporte, d'une part, à sa périphérie interne, une douille 15, qui, s'étendant globalement axialement, traverse axialement ledit dispositif débrayeur 11, à la faveur de l'ouverture centrale 12 de celui-ci, et, d'autre part, à sa périphérie externe, de place en place le long de celle-ci, des pattes 16, qui traversent également axialement le dispositif débrayeur 11, chacune entre deux doigts radiaux adjacents de celui-ci, et qui, chacune respectivement, portent, circonférentiellement, en porte-à-faux, à leur extrémité, au droit de la collerette d'appui 14, et globalement parallèlement à celle-ci, des doigts de retenue 17 propres à assurer, en coopération avec cette collerette d'appui 14, le maintien axial de l'ensemble sur le dispositif débrayeur 11.

Tel que décrit dans la demande de brevet français No 2 544 036 mentionnée ci-dessus, la mise en place d'une telle pièce d'accostage 13 sur le dispositif débrayeur 11 se fait suivant un montage du type à baïonnette: après un rapprochement relatif suffisant de la pièce d'accostage 13 et du dispositif débrayeur 11, on assure, axialement, une flexion relative, vis-à-vis des autres, de l'extrémité de chacun des doigts radiaux du dispositif débrayeur 11 sur lequel doit circonférentiellement s'engager le doigt de retenue 17 des pattes 16 de la pièce d'accostage 13, puis on assure, circonférentiellement, une rotation relative, autour de l'axe de l'ensemble, de ladite pièce d'accostage 13 vis-à-vis dudit dispositif débrayeur 11, pour qu'un tel engagement ait effectivement lieu, et on libère ensuite les doigts radiaux précédemment fléchis du dispositif débrayeur 11.

Dans la forme de réalisation plus particulièrement représentée sur les figures 1 à 5, et pour des raisons qui apparaîtront ci-après, la douille axiale 15 de la pièce d'accostage 13, qui est en pratique en tôle convenablement conformée, présente, dans sa zone médiane, entre deux tronçons globalement rectilignes, un décrochement 18, celui de ses tronçons rectilignes qui est axialement le plus éloigné de sa collerette d'appui 14 ayant globalement un diamètre moindre que celui de l'autre.

A son extrémité libre, c'est-à-dire à l'extrémité libre de son tronçon rectiligne de moindre diamètre, elle est, à sa périphérie interne, chanfreinée, et elle forme ainsi, pour des raisons qui apparaîtront également ci-après, une portée tronconique d'engagement 19.

La butée de débrayage 10 ne fait pas non plus, en soi, partie de la présente invention.

De manière connue en soi, elle comporte, globalement, un élément d'attaque 20, par lequel elle est adaptée à agir sur le dispositif débrayeur 11, par l'intermédiaire de la pièce d'accostage 13, tel que détaillé ci-après, un élément de manoeuvre 22, par lequel elle est destinée, dans les formes de réalisation représentées, à être montée coulissante axialement sur un quelconque organe de guidage, non représenté, et des moyens d'attelage qui assujettissent axialement ledit élément d'attaque 20 audit élément de manoeuvre 22, et par lesquels, dans ces formes de réalisation, et tel que schématisé en traits interrompus sur la figure 1, elle est par ailleurs adaptée à être actionnée par un organe de commande 24, constitué, par exemple, par une fourchette de débrayage à doigts ou bras 21.

Dans les formes de réalisation représentées, l'élément d'attaque 20 est constitué par un roulement à billes.

Pour coopération avec la pièce d'accostage 13, celui-ci comporte une pièce 25, dite ici par commodité pièce d'attaque.

Dans les formes de réalisation représentées, cette pièce d'attaque 25 est constituée par la bague interne de ce roulement à billes, celle-ci étant suffisamment prolongée axialement à cet effet en direction du dispositif débrayeur 11.

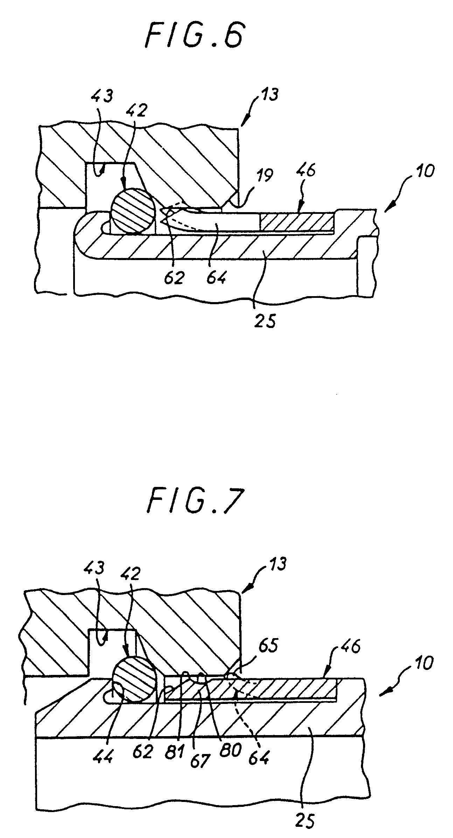

Dans les formes de réalisation plus particulièrement représentées sur les figures 1 à 4, et également à la figure 6, cette bague interne est une pièce massive convenablement usinée.

Conjointement, dans les formes de réalisation représentées, l'élément de manoeuvre 22 comporte, axialement, un manchon 26, par lequel il est adapté à être engagé à coulissement sur l'organe de guidage associé, et, transversalement, à l'extrémité dudit manchon 26 opposée à l'élément d'attaque 20, pour coopération avec celui-ci, un flasque annulaire 27.

A sa périphérie, ce flasque annulaire 27 porte lui-même, axialement en saillie, coaxialement par rapport au manchon 26 et dans le même sens que celui-ci, autour de la bague externe 29 du roulement à billes constituant l'élément d'attaque 20, une couronne 28.

S'agissant, en pratique, dans les formes de réalisation représentées, d'une butée de débrayage autocentreuse à autocentrage maintenu, un jeu est laissé annulairement libre entre cette couronne 28 et le roulement à billes constituant l'élément d'attaque 20.

Les moyens d'attelage assujettissant axialement cet élément d'attaque 20 à l'élément de manoeuvre 22 sont constitués, dans les formes de réalisation représentées, par un capot 30, qui, par une jupe 31, est engagé sans jeu sur la couronne 28 de l'élément de manoeuvre 22.

A l'extrémité axiale de cette jupe 31 disposée du côté du dispositif débrayeur 11, le capot 30 présente, en direction de l'axe de l'ensemble, un bord tombé 33, contre lequel porte, par sa tranche correspondante, la bague externe 29 du roulement à billes constituant l'élément d'attaque 20, mais qui, pour des raisons qui apparaîtront ci-après, s'arrête largement à distance de la bague externe de celui-ci, en laissant subsister annulairement entre lui et celle-ci un espace libre E.

A l'autre extrémité axiale de sa jupe 31, le capot 30, forme, pour l'action des doigts ou bras 21 de l'organe de commande 24, deux bras 34, qui, en positions diamétralement opposées l'un par rapport à l'autre, s'étendent radialement en saillie en direction opposée à l'axe de l'ensemble.

Pour des raisons qui apparaîtront ci-après, ces bras 34 présentent chacun, parallèlement à l'axe de l'ensemble, et en direction du dispositif débrayeur 11, un retour en équerre 35, par lequel ils contournent les bras ou doigts 21 de l'organe de commande 24, et, en bout de ce retour en équerre 35, parallèlement à eux-mêmes, et en direction dudit axe de l'ensemble, une patte 36.

A la figure 1, un tel retour en équerre 35 et une telle patte 36 ne sont visibles que pour l'un des bras 34 concernés.

Bien entendu, il est prévu, entre le capot 30 ainsi constitué et l'élément de manoeuvre 22, des moyens propres à assujettir axialement ce capot 30 à cet élément de manoeuvre 22.

Il peut s'agir, par exemple, de moyens d'encliquetage, des pattes élastiquement déformables étant prévues à cet effet dans la couronne 28 de l'élément de manoeuvre 22 pour coopération avec des ouvertures également prévues à cet effet dans la jupe 31 du capot 30.

Ces dispositions sont bien connues par elles-mêmes, notamment par la demande de brevet français publiée sous le No 2 508 125, et ne faisant pas en soi partie de la présente invention, elles ne seront pas décrites plus en détail ici.

De même, s'agissant, en pratique, comme déjà indiqué ci-dessus, d'une butée de débrayage autocentreuse à autocentrage maintenu, il est prévu, entre l'élément d'attaque 20 et l'élément de manoeuvre 22, des moyens élastiques à action axiale, constitués, par exemple, tel que représenté, par une rondelle ondulée 37 du type de celle vendue sous la dénomination commerciale "ONDUFLEX".

Dans les formes de réalisation représentées, cette rondelle ondulée 37 prend appui sur le flasque annulaire 27 de l'élément de manoeuvre 22, et elle porte sur la tranche correspondante de la bague externe 29 du roulement à billes constituant l'élément d'attaque 20, pour sollicitation de cette bague externe contre le bord tombé 33 du capot 30.

De manière connue en soi, entre la pièce d'attaque 25 de la butée de débrayage 10 ainsi constituée, d'une part, et la pièce d'accostage 13 portée par le dispositif débrayeur 11, d'autre part, sont établis des moyens de solidarisation en traction propres à assurer une liaison axiale entre lesdites pièces dans le sens axial qui, tel que schématisé par la flèche F1 sur la figure 1, va du dispositif débrayeur 11 à la butée de débrayage 10.

La pièce d'accostage 13 comportant axialement une douille 15, et celle-ci étant coaxiale de la pièce d'attaque 25, c'est entre cette douille 15 et cette pièce d'attaque 25 que sont établis lesdits moyens de solidarisation en traction.

Plus précisément, dans les formes de réalisation représentées, la pièce d'attaque 25 est engagée dans la douille 15 de la pièce d'accostage 13, en sorte que les moyens de solidarisation en traction en question interviennent entre la périphérie externe de cette pièce d'attaque 25 et la périphérie interne de cette douille 15.

D'une manière générale, ils comportent, figures 1 et 2, d'une part, un organe annulaire de couplage 42, qui est élastiquement déformable radialement, et qui est au moins partiellement engagé radialement dans une gorge annulaire de retenue 43 ménagée pour lui sur l'une des pièces 13, 25 en cause, et, d'autre part, une portée d'entraînement 44, qui est ménagée globalement transversalement sur l'autre desdites pièces 13, 25, et avec laquelle il est apte à coopérer axialement en appui dans le sens axial considéré, celui repéré par la flèche F1 sur la figure 1.

De manière également connue en soi, il est prévu, en outre, un organe de découplage 46, monté mobile axialement dans une gorge 47, qui est ménagée pour lui sur celle des pièces 13, 25 comportant la portée d'entraînement 44, et dont ladite portée d'entraînement 44 appartient à l'un des flancs.

Suivant l'invention, l'organe de couplage 42 étant porté par la pièce d'accostage 13, et l'organe de découplage 46 par la pièce d'attaque 25 de la butée de débrayage 10, ledit organe de découplage 46 comporte, tel que détaillé ci-après, des moyens d'engagement propres à en permettre l'accouplement débrayables avec ledit organe de couplage 42, au moins pour le sens axial allant du dispositif débrayeur 11 à ladite butée de débrayage 10.

Ainsi donc, la gorge de retenue 43 prévue pour l'organe de couplage 42 est ménagée dans la pièce d'accostage 13, et la gorge 47 prévue corollairement pour l'organe de découplage 46 est ménagée sur la pièce d'attaque 25 de la butée de débrayage 10.

Dans la forme de réalisation plus particulièrement représentée sur les figures 1 à 5, la gorge de retenue 43 est formée entre le décrochement 18 que présente la douille axiale 15 de la pièce d'accostage 13 et une pièce 49 rapportée sur celle-ci.

Par exemple, et tel que représenté, cette pièce 49 est simplement crochetée par des pattes 50 sur la pièce d'accostage 13, du côté de celle-ci opposé au dispositif débrayeur 11, dans la région du coude que forment entre elles sa collerette d'appui 14 et sa douille axiale 15, lesdites pattes 50 traversant cette collerette d'appui 14 à la faveur des entailles ménagées dans celle-ci pour la formation des pattes 16 associées et étant, au-delà, rabattues au contact de sa face opposée.

Quoi qu'il en soit, cette pièce 49, qui se présente globalement sous la forme d'une cuvette à fond 52 largement ajouré par une ouverture centrale 53 dont le diamètre est sensiblement le même que celui de la périphérie interne du tronçon rectiligne de plus petit diamètre de la douille axiale 15 de la pièce d'accostage 13 ; par sa paroi latérale 54 elle est appliquée contre le tronçon rectiligne de plus grand diamètre de ladite douille axiale 15 ; et par un rebord 55, qui est radialement dirigé en direction opposée à l'axe de l'ensemble, et dont les pattes 50 forment, de place en place, des prolongements, elle est appliquée contre la collerette d'appui 14.

Le fond 52 de la pièce 49 ainsi constituée s'étend radialement en direction de l'axe de l'ensemble et il fait face au décrochement 18 de la douille axiale 15.

Il forme donc celui, 57, des flancs de la gorge de retenue 43 qui est tourné axialement dans le même sens que la portée d'entraînement 44.

Autrement dit, dans les formes de réalisation en cause, ce flanc 57 de la gorge de retenue 43 appartient à une pièce, à savoir la pièce 49, qui, distincte de la pièce d'accostage 13, est solidaire de celle-ci.

En pratique, ce flanc 57 est droit.

Par contre, et pour des raisons qui apparaîtront ci-après, l'autre, 58, des flancs de la gorge de retenue 43, c'est-à-dire celui de ses flancs qui, formé par le décrochement 18 de la douille axiale 15, est opposé à la portée d'entraînement 44, présente, dans les formes de réalisation représentées, à compter du fond de cette gorge de retenue 43, une première portée tronconique 59, et, faisant suite à celle-ci, une deuxième portée tronconique 60, qui est de conicité plus faible que celle de la précédente, et qui s'étend en pratique jusqu'à la périphérie interne du tronçon rectiligne de moindre diamètre de la douille axiale 15.

Ainsi donc, dans les formes de réalisation représentées, du côté de son flanc 58, la gorge de retenue 43 va en s'évasant vers l'extérieur, de son fond vers la périphérie externe de la pièce d'attaque 25.

En pratique, dans les formes de réalisation représentées, l'organe de couplage 42 est formé par un simple jonc.

Autrement dit, il s'agit d'une pièce de forme générale torique, et, dans les formes de réalisation représentées, celle-ci a, axialement, une section transversale circulaire.

L'élasticité que présente radialement cet organe de couplage 42 peut résulter de la seule nature de la matière qui le constitue.

En variante, elle peut résulter d'une fente qui l'affecte radialement, le jonc qu'il forme étant par exemple réalisé par simple roulage d'un fil rond.

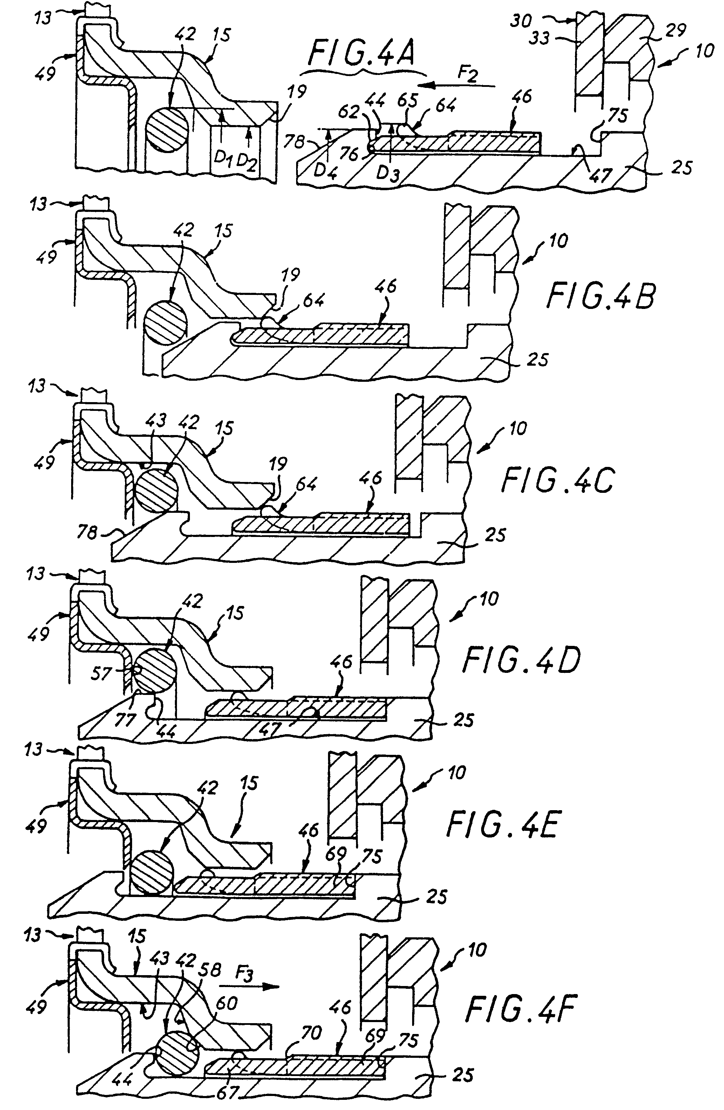

Quoi qu'il en soit, à l'état libre, figure 4A, l'organe de couplage 42 occupe une configuration rétractée pour laquelle son diamètre extérieur D1 est supérieur à celui D2 de la périphérie externe du tronçon rectiligne de moindre diamètre de la douille axiale 15 de la pièce d'attaque 13.

Mais, du fait de son élasticité, il peut prendre une configuration déployée, figure 4D par exemple, pour laquelle son engagement radial dans la gorge de retenue 43 est accentué.

Dans les formes de réalisation représentées, l'organe de découplage 46 se présente, lui, sous la forme générale d'un anneau relativement plat, c'est-à-dire d'un anneau dont la section radiale est allongée parallèlement à son axe.

Du côté axialement opposé à la portée d'entraînement 44, il a, transversalement, un profil droit.

Par contre, celle de ses extrémités axiales qui est dirigée vers la portée d'entraînement 44 est chanfreinée, à sa périphérie externe, par une portée tronconique d'engagement 62.

Ainsi donc, du côté de la portée d'entraînement 44, l'organe de découplage 46 a un profil globalement triangulaire.

Comme pour l'organe de couplage 42, l'élasticité radiale de l'organe de découplage 46 peut résulter de la seule nature de sa matière constitutive.

Mais, tel que représenté, elle peut aussi bien résulter d'une fente 63 l'affectant radialement.

De préférence, au repos, les lèvres de cette fente 63 sont au contact l'une de l'autre, et il subsiste, entre l'organe de découplage 46 et le fond de la gorge 47 dans laquelle il est disposé, un jeu annulaire J, figure 2.

Dans les formes de réalisation plus particulièrement représentées sur les figures 1 à 6, les moyens d'engagement prévus sur l'organe de découplage 46 pour son accouplement débrayable avec l'organe de couplage 42 sont formés par au moins une languette 64, dite ici par simple commodité languette d'entraînement, que ledit organe de découplage 46 présente axialement, et qui est élastiquement déformable radialement, avec, au repos, une extrémité libre 65 qui fait saillie sur la périphérie externe de cet organe de découplage 46.

Au repos, l'extrémité libre 65 de cette languette d'entraînement 64 s'étend sur une circonférence de diamètre D3 légèrement supérieur à celui D2 de la périphérie interne du tronçon rectiligne de moindre diamètre de la douille axiale 15 de la pièce d'accostage 13, figure 4A.

Bien entendu, l'organe de découplage 46 comporte ainsi, convenablement réparties circulairement, plusieurs languettes d'entraînement 64 identiques.

Elles sont d'un seul tenant avec l'organe de découplage 46 qu'elles équipent, et, à compter de leur zone d'enracinement à celui-ci, elles s'étendent axialement en direction de la portée d'entraînement 44.

L'organe de couplage 42 étant formé, comme indiqué ci-dessus, par un simple jonc dans les formes de réalisation représentées, chacune d'elles a, axialement, au voisinage de son extrémité libre 65, dans ces formes de réalisation, un profil au moins en partie complémentaire de celui dudit organe de couplage 42, et donc, en pratique, au moins en partie circulaire.

Dans la forme de réalisation plus particulièrement représentée sur les figures 1 à 5, les languettes d'entraînement 64 sont au nombre de six, et elles alternent avec des pattes axiales 67, qui forment la partie courante correspondante de l'organe de découplage 46, et dont elles sont chacune séparées latéralement par des fentes 68.

Ces pattes 67, comme les languettes d'entraînement 64, sont issues d'une portion massive 69 de l'organe de découplage 46, et, par rapport à celle-ci, elles s'étendent axialement au-delà de l'extrémité libre 65 desdites pattes d'entraînement 64.

Ainsi donc, dans la forme de réalisation représentée sur les figures 1 à 5, les languettes d'entraînement 65 sont, axialement, tout entières contenues dans le contour hors tout de l'organe de découplage 46.

Par ailleurs, dans cette forme de réalisation, c'est à l'extrémité axiale des pattes 67 qu'est formée la portée tronconique d'engagement 62 de l'organe de découplage 46.

Ainsi donc, dans la forme de réalisation plus particulièrement représentée sur les figures 1 à 5, cette portée tronconique d'engagement 62 appartient à une portion de l'organe de découplage 46, qui, distincte des languettes d'entraînement 64, s'étend axialement entre l'extrémité libre 65 de ces languettes d'entraînement 64 et la portée d'entraînement 44.

En outre, dans cette forme de réalisation, l'organe de découplage 46 présente, transversalement, dans sa zone médiane, à distance de l'extrémité libre 65 des languettes d'entraînement 64, et axialement tourné vers ladite extrémité libre 65 de celles-ci, un épaulement 70.

Dans la forme de réalisation représentée, cet épaulement 70, qui affecte la périphérie externe de l'organe de découplage 46, s'étend sensiblement au droit de la zone d'enracinement des languettes d'entraînement 64 et des pattes axiales 67 à la portion massive 69 de cet organe de découplage 46, en sorte que cette dernière a, radialement, une épaisseur supérieure à celle dans laquelle sont formées lesdites languettes d'entraînement 64 et lesdites pattes axiales 67.

En outre, il s'agit d'un épaulement globalement tronconique.

Quoi qu'il en soit, l'épaississement auquel il conduit pour une position de l'organe de découplage 46 renforce avantageusement celui-ci.

Enfin, dans le cas où, tel que représenté, l'organe de découplage 46 est réalisé en matière synthétique, par moulage d'une telle matière, il comporte, à sa périphérie externe, au droit de ses languettes d'entraînement 64, des saignées 73 entaillant axialement en surface sa portion massive 69, pour le passage des poinçons propres à la formation de l'extrémité libre 65 de ces languettes d'entraînement 64.

Du côté axialement opposé à la portée d'entraînement 44, la gorge 47 dans laquelle est monté mobile axialement l'organe de découplage 46 ainsi constitué a, dans la forme de réalisation représentée, un flanc droit 75, à l'image de celui, correspondant, dudit organe de découplage 46.

Mais, à la racine de celui de ses flancs auquel appartient la portée d'entraînement 44, cette gorge 47 présente, dans la forme de réalisation représentée, un dégagement 76 de profil propre à y permettre une pénétration au moins partielle de l'organe de découplage 46.

Dans la forme de réalisation représentée, ce profil est donc globalement triangulaire, à l'image de celui, correspondant, de l'organe de découplage 46.

Le dégagement 76 que présente ainsi, à la manière d'une simple piqûre, la gorge 47, se raccorde à la portée d'entraînement 44, et, en liaison avec le bord libre de celle-ci, la pièce d'attaque 25 de la butée de débrayage 10 comporte, sur sa périphérie externe, une portée cylindrique 77 laissant une épaisseur suffisante de matière entre elle et un tel dégagement 76.

Cette portée cylindrique est elle-même en liaison avec une portée tronconique d'engagement 78 que présente, à sa périphérie externe, ladite pièce d'attaque 25, à son extrémité axiale libre.

La portée cylindrique 77 de la pièce d'attaque 25, qui est à niveau avec la partie courante de la périphérie externe de celle-ci, a, en pratique, un diamètre D4 légèrement inférieur à celui D2 de la périphérie interne du tronçon de moindre diamètre de la douille axiale 15 de la pièce d'accostage 13, figure 4A.

Cette pièce d'accostage 13 est équipée par avance de l'organe de couplage 42, dans la gorge de retenue 43 qu'elle forme avec la pièce 49 qui en est solidaire, et, d'ailleurs, cet organe de couplage 42 peut occuper axialement une place quelconque dans cette gorge de retenue 43, figure 4A.

De même, la pièce d'attaque 25 de la butée de débrayage 10 est équipée par avance de l'organe de découplage 46, dans sa gorge 47, et celui-ci y occupe axialement une place quelconque.

Par exemple, et tel que représenté à la figure 4A, on supposera ci-après que l'organe de découplage 46 est en position avancée dans cette gorge 47, celle de ses extrémités axiales qui comporte la portée tronconique d'engagement 62 étant engagée dans le dégagement 76 présent à la racine du flanc de ladite gorge 47 auquel appartient cette portée d'entraînement 44.

Pour l'attelage de l'ensemble, la butée de débrayage 10 est engagée axialement, par sa pièce d'attaque 25, dans la douille axiale 15 de la pièce d'accostage 13, tel que schématisé par la flèche F2 sur la figure 4A.

Si, comme indiqué, l'organe de découplage 46 est alors en position avancée, les languettes d'entraînement 64 de cet organe de découplage 46 viennent, au cours de cet engagement axial, buter par leur extrémité libre 65 contre la portée tronconique d'engagement 19 de la pièce d'accostage 13, figure 4B, en sorte que, ainsi arrêté par rapport à la butée de débrayage 10, l'organe de découplage 46 se déplace dans la gorge 47 de celle-ci en direction de l'extrémité axiale de cette gorge 47 opposée à la portée d'entraînement 44.

Conjointement, le mouvement axial d'engagement de la butée de débrayage 10 étant poursuivi la pièce d'attaque 25 de celle-ci vient porter, par sa portée tronconique d'engagement 78, contre l'organe de couplage 42, figure 4C, ce qui contraint peu à peu celui-ci à s'effacer élastiquement à l'intérieur de la gorge de retenue 43 de la pièce d'accostage 13.

A un certain moment, figure 4D, la pièce d'attaque 25 de la butée de débrayage 10 vient à nouveau entraîner, par son extrémité axiale opposée à la portée d'entraînement 44, l'organe de découplage 46, ce qui contraint les languettes d'entraînement 64 de celui-ci à s'engager dans le tronçon de moindre diamètre de la douille axiale 15 de la pièce d'accostage 13, avec un fléchissement élastique radial desdites languettes d'entraînement 64 en direction de l'axe de l'ensemble.

Par ailleurs, au cours de ce mouvement axial d'engagement de la butée de débrayage 10 étant poursuivi, la pièce d'attaque 25 de celle-ci s'engage par sa portée cylindrique 77 dans l'organe de couplage 42, figure 4D.

Bien entendu, cette phase peut intervenir simultanément avec la précédente, ou avant ou après celle-ci.

Quoi qu'il en soit, une fois franchie la portée d'entraînement 44, l'organe de couplage 42, ainsi libéré, tend à reprendre, à la faveur de la gorge 47 de la pièce d'attaque 25, sa configuration rétractée initiale et, le cas échéant, tel que représenté, figure 4E, il vient donc porter contre le fond de cette gorge 47.

Mais, en variante, il peut aussi bien demeurer à distance de celui-ci.

Bien entendu, la rétraction de l'organe de couplage 42 intervient dès que la portée d'entraînement 44 l'a franchi.

Mais, en pratique, et tel que le schématise le jeu apparaissant à la figure 4E entre cet organe de couplage 42 et la portée d'entraînement 44, le mouvement axial d'engagement imprimé à la butée de débrayage 10 est volontairement prolongé d'une surcourse, pour être sûr que cette portée d'entraînement 44, qui appartient à la pièce d'attaque 25 de cette butée de débrayage 10, a bien ainsi franchi l'organe de couplage 42, et que celui-ci, ainsi libéré, a pu s'engager dans la gorge 47 de cette pièce d'attaque 25.

Quoi qu'il en soit, du fait du recul préalablement imprimé, si nécessaire, et suivant le processus décrit ci-dessus, dans cette gorge 47, à l'organe de couplage 46, par les languettes d'entraînement 64 de celui-ci, c'est en toute certitude que, quelle que soit la position initiale de cet organe de découplage 46 dans cette gorge 47, la place est libre dans celle-ci pour l'organe de couplage 42 au voisinage immédiat de la portée d'entraînement 44.

Il suffit donc, ensuite, pour l'attelage recherché, d'inverser, suivant la flèche F3 de la figure 4F, le mouvement axial imprimé à la butée de débrayage 10.

La pièce d'attaque 25 de l'élément d'attaque 20 de celle-ci vient alors porter contre l'organe de couplage 42 par sa portée d'entraînement 44, et, refoulant cet organe de couplage 42 en direction du flanc 58 de la gorge de retenue 43, elle vient l'appliquer axialement contre celle-ci, et, plus précisément, contre sa portée tronconique de plus faible conicité 60.

L'attelage, ou couplage, recherché, est alors assuré: si, suivant la flèche F1 de la figure 1, qui correspond à la flèche F3 de la figure 4F, une action de traction est exercée sur la butée de débrayage 10 par l'organe de commande 24, cette action de traction est transmise au dispositif débrayeur 11 à travers successivement l'organe de couplage 42, par la portée d'entraînement 44, et la pièce d'accostage 13, par la portée tronconique 60 du flanc 58 de la gorge de retenue 43.

Ainsi qu'il est aisé de le comprendre, le mouvement axial qu'il est nécessaire d'appliquer à la butée de débrayage 10, d'abord dans un sens, puis dans l'autre, pour un tel couplage, peut avantageusement lui être imprimé en aveugle à l'aide de l'organe de commande 24, les doigts 21 de celui-ci agissant d'abord sur les pattes 36 de son capot 30, puis sur les bras 34 de ce capot 30 dont les pattes 36 précédentes forment un prolongement.

Il en est de même pour le découplage.

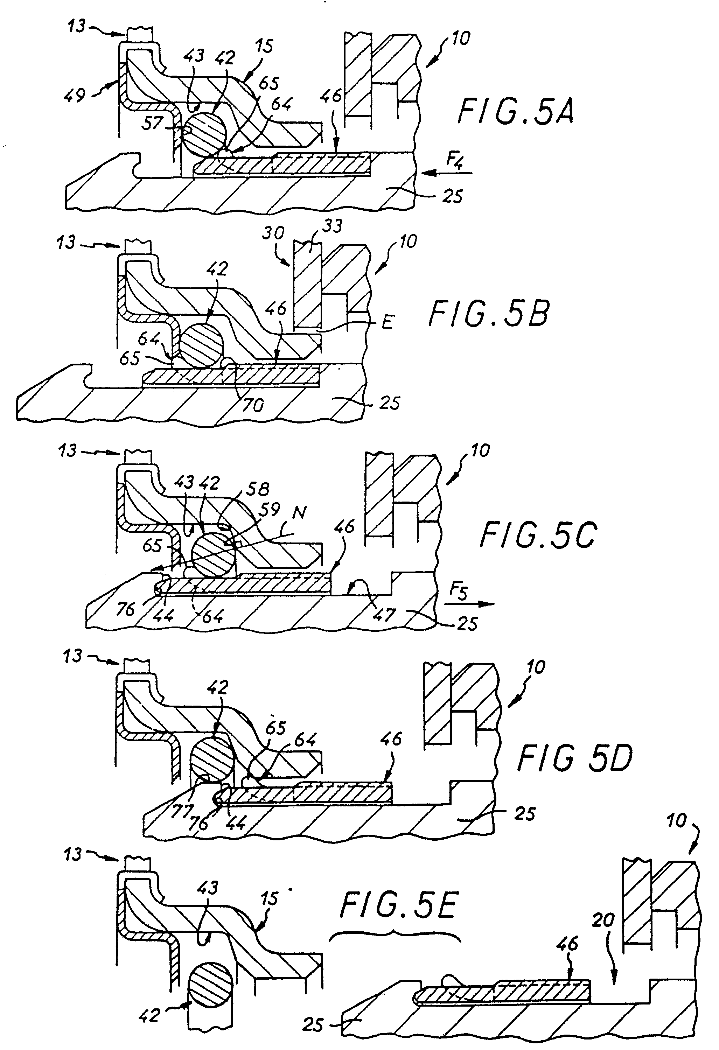

Dans un premier temps, et suivant la flèche F4 de la figure 5A, il est procédé à nouveau à un engagement axial de la butée de débrayage 10 dans la douille 15 de la pièce d'accostage 13, en sorte que, repoussé par l'organe de découplage 46, l'organe de couplage 42 vient buter contre le flanc 57 de la gorge de retenue 43, et que, le mouvement d'engagement axial de la butée de débrayage 10 étant poursuivi, cet organe de découplage 46 s'engage dans l'organe de couplage 42, moyennenant une déformation radiale élastique de celui-ci.

D'abord limité à son extrémité axiale, cet engagement de l'organe de découplage 46 dans l'organe de couplage 42 s'étend ensuite à l'extrémité libre 65 de ses languettes d'entraînement 64, par déformation élastique radiale de celles-ci en direction de l'axe de l'ensemble, lesdites languettes d'entraînement 64 retrouvant ensuite par élasticité leur configuration initiale après franchissement de l'organe de couplage 42, figure 5B.

Conjointement, et ainsi qu'on le notera, le tronçon de moindre diamètre de la douille axiale 15 de la pièce d'accostage 13 s'est engagé dans l'espace libre E ménagé entre le bord tombé 33 du capot 30 et la pièce d'attaque 25.

Quoi qu'il en soit, par les languettes d'entraînement 64 de l'organe de découplage 46, l'organe de couplage 42 se trouve dès lors accouplé, mais de manière débrayable, à cet organe de découplage 46, au moins dans le sens axial allant du dispositif débrayeur 11 à la butée de débrayage 10.

Si, donc, il est imprimé à la butée de débrayage 10, suivant la flèche F5 de la figure 5C, un mouvement axial inverse du précédent, la pièce d'attaque 25 de cette butée de débrayage 10 vient entraîner, par celui des flancs de la gorge 47 auquel appartient la portée d'entraînement 44, l'équipage formé conjointement par l'organe de découplage 46 et l'organe de couplage 42 en prise avec celui-ci, jusqu'à ce que, tel que représenté, cet organe de couplage 42 vienne buter contre le flanc 58 de la gorge de retenue 43 de la pièce d'accostage 13 opposé à ladite portée d'entraînement 44.

Or, quand l'organe de couplage 42 est ainsi en prise avec l'organe de découplage 46, c'est par la portée tronconique de plus forte conicité 59 de ce flanc 58 que la pièce d'attaque 13 porte alors sur l'organe de couplage 42.

Par construction, la conicité de cette portée tronconique 59 est telle que, lorsque, comme indiqué, l'organe de découplage 46 est en butée contre celui des flancs de la gorge 47 auquel appartient la portée d'entraînement 44, la normale N à cette portée tronconique 59 s'étend à l'écart des moyens d'engagement associés, et, donc, en l'espèce, à l'écart de l'extrémité libre 65 des languettes d'entraînement 64 de l'organe de découplage 46.

De préférence, et tel que représenté, cette normale N s'étend même également à l'écart de la gorge 47.

Quoi qu'il en soit, si le mouvement axial en cours de la butée de débrayage 10 est poursuivi, figure 5D, il résulte de cette disposition que la sollicitation dont est l'objet l'organe de couplage 42 de la part de la pièce d'attaque 25 conduit cet organe de couplage 42 à échapper à l'organe de découplage 46.

Il ne peut dès lors que prendre contact avec la portée cylindrique 77 de la pièce d'attaque 25 de la butée de débrayage 10, figure 5D.

Ainsi qu'on le comprendra, la prise de contact de l'organe de couplage 42 avec cette portée cylindrique 77 se trouve facilitée, d'une part, par le fait que, par l'engagement de l'organe de découplage 46 dans le dégagement 76 prévu dans la gorge 47 à la base de la portée d'entraînement 44, l'intervalle séparant axialement l'extrémité libre 65 des languettes d'entraînement 64 de l'organe de découplage 46 de cette portée cylindrique 77 se trouve avantageusement réduit, et, d'autre part, par le fait que la normale N précisée ci-dessus s'étend elle aussi préférentiellement à l'écart de cette gorge 47.

Le mouvement axial en cours de la butée de débrayage 10 étant poursuivi, l'organe de couplage 42 échappe alors à la pièce d'attaque 25, figure 5E.

Le découplage recherché est ainsi assuré.

Mais un nouveau couplage est possible, suivant le processus précédemment décrit.

Ainsi donc, il est possible, suivant l'invention, d'assurer de manière réversible un tel couplage et un tel découplage.

A chaque fois il y a, suivant le processus décrit, un accouplement débrayable de l'organe de couplage avec l'organe de découplage, suivi de leur désaccouplement, et, en pratique, dans la forme de réalisation représentée, cet accouplement est propre aussi bien à un entraînement de l'ensemble dans le sens axial allant du dispositif débrayeur de l'embrayage concerné à la butée de débrayage que dans le sens axial opposé, même s'il n'est opérationnel que dans le premier de ces sens.

Dans la variante de réalisation schématiquement représentée à la figure 6, la portée tronconique d'engagement 62 de l'organe de découplage 46 appartient à l'extrémité libre de ses languettes d'entraînement 64.

En pratique, dans la forme de réalisation représentée, la portion correspondante de l'organe de découplage 46 se réduit à ces languettes d'entraînement 64, sans de quelconques pattes axiales entre celles-ci.

Quoi qu'il en soit, les languettes d'entraînement 64 sont aptes à passer élastiquement d'une configuration déployée, qui est schématisée en traits interrompus sur la figure, et pour laquelle elles sont aptes à venir en butée contre la portée tronconique d'engagement 19 de la pièce d'accostage 13 lors de l'engagement axial dans celle-ci de la pièce d'attaque 25 de la butée de débrayage 10, à une configuration rétractée, qui est représentée en trait plein sur la figure, et pour laquelle elles sont aptes à venir s'engager dans l'organe de couplage 42, pour le déploiement de celui-ci qui, suivant le processus décrit précédemment, est nécessaire au découplage.

Ainsi qu'on le notera, dans la forme de réalisation représentée, la pièce d'attaque 25, au lieu d'être une pièce massive convenablement usinée, est une pièce en tôle convenablement conformée.

Corollairement, au lieu d'être une pièce en tôle convenablement conformée, la pièce d'accostage 13 est, dans la forme de réalisation représentée, une pièce massive convenablement usinée.

Il en est de même dans la variante de réalisation 5 illustrée à la figure 7.

En outre, dans celle-ci, les moyens d'engagement prévus pour permettre l'accouplement débrayable de l'organe de découplage 46 avec l'organe de couplage 42 sont formés par une rainure 80 que comporte annulairement, sur sa périphérie externe, cet organe de découplage 46.

De préférence, mais non obligatoirement, cette rainure 80 a un profil au moins en partie complémentaire de celui de l'organe de couplage 42, et donc un profil au moins en partie circulaire.

En variante, ce profil peut être différent, et par exemple quadrangulaire.

Par ailleurs, si la portée tronconique d'engagement 62 de l'organe de découplage 46 se raccorde alors directement, par une arête 81, A la rainure 80, dans la forme de réalisation représentée, une portée cylindrique peut aussi bien être prévue entre elle et celle-ci.

Enfin, comme précédemment, l'organe de découplage 46 présente, axialement, au moins une languette d'entraînement 64, et, en pratique, une pluralité de telles languettes d'entraînement 64, qui sont élastiquement déformables radialement, et dont l'extrémité libre 65, au repos, fait radialement saillie sur sa périphérie externe.

De préférence, et tel que représenté, cette extrémité libre 65 des languettes d'entraînement 64 est axialement à distance de la rainure 80, en s'étendant du côté de cette rainure opposé à la portée d'entraînement 44.

Ainsi qu'on le notera, les languette d'entraînement 64, qui, comme précédemment, sont d'un seul tenant avec l'organe de découplage 46, en alternant avec des pattes axiales 67 de celui-ci, sont, axialement, tout entières contenues dans le contour hors tout de cet organe de découplage 46.

Le fonctionnement de cette variante de réalisation est en tout point semblable à celui décrit précédemment.

Cependant, lorsque l'organe de couplage 42 est en prise avec l'organe de découplage 46, il est engagé radialement dans la rainure 80 de celui-ci.

La présente invention ne se limite d'ailleurs pas aux formes de réalisation décrites et représentées, mais englobe toute variante d'exécution et/ou de combinaison de leurs divers éléments. En particulier, dans une variante de réalisation non représentée l'organe de découplage, au lieu d'être ouvert par une fente pour sa mise en place sur la pièce d'attaque qu'il doit équiper, peut présenter, régulièrement réparties le long de l'une et l'autre de ses tranches axiales d'extrémité, des échancrures, qui, circulairement alternées de l'une à l'autre de ces tranches, sont axialement imbriquées de l'une à l'autre de celles-ci.

**Revendications**

1. Montage de butée de débrayage, du genre comportant, pour l'attelage d'une butée de débrayage (10) au dispositif débrayeur (11) d'un embrayage, une pièce (13), dite ici par commodité pièce d'accostage, qui est convenablement rapportée sur ledit dispositif débrayeur (11), et des moyens de solidarisation en traction, qui, établis entre la pièce d'accostage (13) et une pièce (25), dite ici par commodité pièce d'attaque, appartenant à la butée de débrayage (10), sont propres à assurer une liaison axiale entre lesdites pièces (13, 25) dans le sens axial allant du dispositif débrayeur (11) à ladite butée de débrayage (10), lesdits moyens de solidarisation en traction comportant, d'une part, un organe annulaire de couplage (42), élastiquement déformable radialement, qui est au moins partiellement engagé radialement dans une gorge annulaire de retenue (43) ménagée pour lui sur l'une quelconque desdites pièces (13, 25), et, d'autre part, une portée d'entraînement (44), qui est ménagée globalement transversalement sur l'autre de celles-ci, et avec laquelle ledit organe de couplage (42) est apte à coopérer axialement en appui dans le sens axial considéré, et du genre comportant également, pour le découplage de la butée de débrayage (10) par rapport au dispositif débrayeur (11) de l'embrayage concerné, un organe annulaire de découplage (46) monté mobile axialement dans une gorge (47), qui est ménagée pour lui sur celle des pièces (13, 25) comportant la portée d'entraînement (44), et dont ladite portée d'entraînement (44) appartient à l'un des flancs, *caractérisé en ce que*, l'organe de couplage (42) étant porté par la pièce d'accostage (13) et l'organe de découplage (46) par la pièce d'attaque (25), ledit organe de découplage (46) comporte des moyens d'engagement propres à en permettre l'accouplement débrayable avec ledit organe de couplage (42), au moins pour le sens axial allant du dispositif débrayeur à la butée de débrayage, c'est-à-dire des moyens impliquant un certain emboîtement relatif entre l'organe de couplage (42) et l'organe de découplage (46) lorsque ces organes sont en prise l'un avec l'autre.

2. Montage de buté de débrayage suivant la revendication 1, *caractérisé en ce que* lesdits moyens d'engagement sont formés par au moins une languette (64), dite ci-après par simple commodité, languette d'entraînement, que l'organe de découplage (46) présente axialement, et qui est élastiquement déformable radialement, avec, au repos, une extrémité libre (65) qui fait saillie sur la périphérie externe dudit organe de découplage (46).

3. Montage de butée de débrayage suivant la revendication 2, *caractérisé en ce que*, l'organe de couplage (42) étant formé par un jonc, la languette d'entraînement (64) a, axialement, au voisinage de son extrémité libre (65), un profil au moins en partie complémentaire de celui dudit organe de couplage (42).

4. Montage de butée de débrayage suivant l'une quelconque des revendications 2, 3, *caractérisé en ce que*, à distance de l'extrémité libre (65) de la languette d'entraînement, l'organe de découplage (46) présente transversalement, axialement tourné vers ladite extrémité libre, un épaulement (70).

5. Montage de butée de débrayage suivant l'une quelconque des revendications 1 à 4, caractérisé en ce que, à son extrémité axiale disposée du côté de la portée d'entraînement (44), l'organe de découplage (46) présente, sur sa périphérie externe une portée tronconique d'engagement (62).

6. Montage de butée de débrayage suivant la revendication 5, *caractérisé en ce que* ladite portée tronconique d'engagement (62) appartient à une portion de l'organe de découplage (46), qui, distincte de la languette d'entraînement (64), s'étend axialement entre l'extrémité libre (65) de ladite languette d'entraînement et la portée d'entraînement (44).

7. Montage de butée de débrayage suivant la revendication 5, *caractérisé en ce que* ladite portée tronconique d'engagement (62) appartient à l'extrémité libre (65) de la languette d'entraînement (64).

8. Montage de butée de débrayage suivant la revendication 1, caractérisé en ce que lesdits moyens d'engagement sont formés par une rainure (80) que comporte annulairement l'organe de découplage (46) sur sa périphérie externe.

9. Montage de butée de débrayage suivant la revendication 8, *caractérisé en ce que*, axialement, la rainure (80) de l'organe de découplage (46) a un profil au moins en partie complémentaire de celui de l'organe de couplage (42).

10. Montage de butée de débrayage suivant l'une quelconque des revendications 8, 9, *caractérisé en ce que*, à son extrémité axiale disposée du côté de la portée d'entraînement (44), l'organe de découplage (46) présente, sur sa périphérie externe, une portée tronconique d'engagement (62).

11. Montage de butée de débrayage suivant l'une quelconque des revendications 8 à 10, *caractérisé en ce que* l'organe de découplage (46) présente, axialement, au moins une languette (64), dite ci-après par simple commodité languette d'entraînement, qui est élastiquement déformable radialement, et dont l'extrémité libre (65), au repos, fait radialement saillie sur sa périphérie externe.

12. Montage de butée de débrayage suivant la revendication 11, *caractérisé en ce que* l'extrémité libre (65) de ladite languette d'entraînement (64) est axialement à distance de la rainure (80).

13. Montage de butée de débrayage suivant l'une quelconque des revendications 2, 11, *caractérisé en ce que* l'extrémité libre (65) de ladite languette d'entraînement (64) s'étend du côté de la rainure (80) opposé à la portée d'entraînement (44).

14. Montage de butée de débrayage suivant l'une quelconque des revendications 2, 11, *caractérisé* en ce que ladite languette d'entraînement (64) est d'un seul tenant avec l'organe de découplage (46).

15. Montage de butée de débrayage suivant l'une quelconque des revendications 2, 11, caractérisé en ce que, axialement, ladite languette d'entraînement (64) est tout entière contenue dans le contour hors tout de l'organe de découplage (46).

16. Montage de butée de débrayage suivant l'une quelconque des revendications 2, 11, caractérisé en ce que l'organe de découplage (46) comporte, réparties circulairement, plusieurs languettes d'entraînement (64).

17. Montage de butée de débrayage suivant l'une quelconque des revendications 1 à 16, *caractérisé en ce que* la gorge (47) de la pièce d'attaque (25) dans laquelle est monté mobile axialement l'organe de découplage (46) présente, à la racine de celui de ses flancs auquel appartient la portée d'entraînement (44), un dégagement (76) de profil propre à y permettre une pénétration au moins partielle dudit organe de découplage (46).

18. Montage de butée de débrayage suivant la revendication 17, *caractérisé en ce que* le profil dudit dégagement (76) est globalement triangulaire, et la pièce d'attaque (25) présente, en liaison avec le bord libre de la portée d'entraînement (44), une portée cylindrique (77).

19. Montage de butée de débrayage suivant l'une quelconque des revendications 1 à 18, *caractérisé en ce que* le flanc (58) de la gorge de retenue (43) de la pièce d'accostage (13) opposé à la portée d'entraînement (44) présente une portée tronconique (59), qui est propre à l'appui de l'organe de couplage (42) lorsque celui-ci est en prise avec l'organe de découplage (46), et dont la conicité est telle que, lorsque ledit organe de découplage (46) est en butée contre celui des flancs de la gorge (47) de la pièce d'attaque (25) auquel appartient ladite portée d'entraînement (44), la normale (N) à ladite portée tronconique (59) le long de la ligne de contact entre l'organe de couplage (42) et celle-ci s'étend à l'écart des moyens d'engagement associés.

20. Montage de butée de débrayage suivant la revendication 19, *caractérisé en ce que* ladite normale (N) s'étend également à l'écart de la gorge (47) de la pièce d'attaque (25) dans laquelle est monté mobile axialement l'organe de découplage (46).

21. Montage de butée de débrayage suivant l'une quelconque des revendications 19, 20, *caractérisé en ce que* le flanc (58) de la gorge de retenue (43) de la pièce d'accostage (13) opposé à la portée d'entraînement (44) présente une autre portée tronconiqué (60), de conicité plus faible que celle de la précédente, pour appui de l'organe de couplage (42) lorsque celui-ci est en prise avec ladite portée d'entraînement (44).

22. Montage de butée de débrayage suivant l'une quelconque des revendications 19 à 21, caractérisé en ce que le flanc (57) de la gorge de retenue (43) qui est tourné axialement du même côté que la portée d'entraînement (44) appartient à une pièce (49), qui, distincte de la pièce d'accostage (13) est solidaire de celle-ci.

23. Montage de butée de débrayage suivant l'une quelconque des revendication 1 à 22, caractérisé en ce que l'extrémité libre de la pièce d'attaque (25) présente une portée tronconique d'engagement (78).

**Patentansprüche**

1. Zusammenbau eines Kupplungsausrücklagers von der Art, die für die Ankopplung eines Kupplungsausrücklagers (10) an die Ausrückvorrichtung (11) einer Kupplung ein Stück (13) enthält, welches hier der Einfachheit halber als Kopplungsstück bezeichnet wird und auf zweckmäßige Weise an der genannten Ausrückvorrichtung (11) angebracht ist, sowie Zugverbindungsmittel, die zwischen dem Kopplungsstück (13) und einem Stück (25), welches hier der Einfachheit halber als Antriebsstück bezeichnet wird, welches zum Kupplungsausrücklager (10) gehört, vorgesehen und geeignet sind, eine axiale Verbindung zwischen den genannten Stücken (13, 25) in axialer Richtung von der Ausrückvorrichtung (11) zum genannten Kupplungsausrücklager (10) zu gewährleisten, wobei die genannten Zugverbindungsmittel einerseits ein ringförmiges Verbindungsorgan (42) enthalten, welches in radialer Richtung elastisch verformbar ist und wenigstens teilweise radial in eine ringförmige Halterille (43) eingreift, die ihrerseits an einem beliebigen der genannten Stücke (13, 25) angebracht ist, und andererseits eine Antriebsfläche (44), die im wesentlichen in Querrichtung an dem anderen dieser Stücke vorgesehen ist und womit das genannte Verbindungsorgan (42) axial durch Auflage in der betreffenden axialen Richtung zusammenwirken kann, und von der Art, die für das Ausrücken des Kupplungsausrücklagers (10) im Verhältnis zur Ausrückvorrichtung (11) der betreffenden Kupplung auch ein ringförmiges Entriegelungselement (46) aufweist, welches axial beweglich in einer Rille (47) angebracht ist, die dazu an demjenigen der Stücke (13, 25) vorgesehen ist, welches die Antriebsfläche (44) enthält und wobei die genannte Antriebsfläche (44) zu einer der Flanken gehört, *dadurch gekennzeichnet, daß*, da das Verbindungsorgan (42) auf dem Kopplungsstück (13) und das Entriegelungselement (46) auf dem Antriebsstück (25) aufliegt, das genannte Entriegelungselement (46) über Eingriffsmittel verfügt, die eine ausrückbare Kopplung mit dem genannten Verbindungsorgan (42) gestatten, zumindest in der axialen Richtung, die von der Ausrückvorrichtung zum Kupplungsausrücklager verläuft, d.h. Mittel, die ein gewisses relatives Ineinandergreifen zwischen dem Verbindungsorgan (42) und dem Entriegelungselement (46) bewirken, wenn diese Organe miteinander in Eingriff stehen.

2. Zusammenbau eines Kupplungsausrücklagers nach Anspruch 1 *dadurch gekennzeichnet, daß* die genannten Einrückelemente aus wenigstens einer Lasche (64) bestehen, die nachstehend der Einfachheit halber als Antriebslasche bezeichnet wird, welche das Entriegelungselement (46) in axialer Richtung aufweist und in radialer Richtung elastisch verformbar ist, im Ruhezustand mit einem freien Ende (65), welches an der Außenperipherie des genannten Entriegelungselements (46) übersteht.

3. Zusammenbau eines Kupplungsausrücklagers nach Anspruch 2, *dadurch gekennzeichnet, daß* das Verbindungsorgan (42) aus einem Ring besteht und die Antriebslasche (64) axial in Nähe des freien Endes (65) ein Profil aufweist, das wenigstens teilweise das Profil des genannten Verbindungsorgans (42) ergänzt.

4. Zusammenbau eines Kupplungsausrücklagers nach einem der Ansprüche 2, 3, *dadurch gekennzeichnet, daß* das Entriegelungselement (46) in einem Abstand vom freien Ende (65) der Antriebslasche in Querrichtung und axial dem genannten freien Ende zugewandt einen Bund (70) aufweist.

5. Zusammenbau eines Kupplungsausrücklagers nach einem der Ansprüche 1 bis 4, *dadurch gekennzeichnet, daß* das Entriegelungselement (46) an dem axialen Ende, welches auf der Seite der Antriebsfläche (44) angeordnet ist, eine kegelstumpfförmige Eingriffsfläche (62) aufweist.

6. Zusammenbau eines Kupplungsausrücklagers nach Anspruch 5, *dadurch gekennzeichnet, daß* die genannte kegelstumpfförmige Eingriffsfläche (62) einem Teil des Entriegelungselements (46) angehört, welches sich von der Antriebslasche (64) unterscheidet und sich axial zwischen dem freien Ende (65) der genannten Antriebslasche und der Antriebsfläche (44) erstreckt.

7. Zusammenbau eines Kupplungsausrücklagers nach Anspruch 5, *dadurch gekennzeichnet, daß* die genannte kegelstumpfförmige Eingriffsfläche (62) zum freien Ende (65) der Antriebslasche (64) gehört.

8. Zusammenbau eines Kupplungsausrücklagers nach Anspruch 1, *dadurch gekennzeichnet, daß* die genannten Eingriffsmittel aus einer Nut (80) bestehen, die das Entriegelungselement (46) ringförmig an der Außenperipherie aufweist.

9. Zusammenbau eines Kupplungsausrücklagers nach Anspruch 8, *dadurch gekennzeichnet, daß* die Nut (80) des Entriegelungselements (46) in axialer Richtung ein Profil besitzt, welches wenigstens teilweise das Profil des Verbindungsorgans (42) ergänzt.

10. Zusammenbau eines Kupplungsausrücklagers nach einem der Ansprüche 8, 9, *dadurch gekennzeichnet, daß* das Entriegelungselement (46) an dem axialen Ende, welches auf der Seite der Antriebsfläche (44) liegt, an der Außenperipherie eine kegelstumpfförmige Eingriffsfläche (62) aufweist.

11. Zusammenbau eines Kupplungsausrücklagers nach einem der Ansprüche 8 bis 10, *dadurch gekennzeichnet, daß* das Entriegelungselement (46) in axialer Richtung wenigstens eine Lasche (64) aufweist, die nachstehend der Einfachheit halber als Antriebslasche bezeichnet wird und die in radialer Richtung elastisch verformbar ist und deren freies Ende (65) im Ruhezustand radial an der äußeren Peripherie übersteht.

12. Zusammenbau eines Kupplungsausrücklagers nach Anspruch 11, *dadurch gekennzeichnet, daß* das freie Ende (65) der genannten Antriebslasche (64) axial einen Abstand zu der Nut (80) aufweist.

13. Zusammenbau eines Kupplungsausrücklagers nach einem der Ansprüche 2, 11, *dadurch gekennzeichnet*, daß sich das freie Ende (65) der genannten Antriebslasche (64) auf der Seite der Nut (80) erstreckt, die der Antriebsfläche (44) gegenüberliegt.

14. Zusammenbau eines Kupplungsausrücklagers nach einem der Ansprüche 2, 11, *dadurch gekennzeichnet*, daß die genannte Antriebslasche (64) aus einem Stück mit dem Entriegelungselement (46) besteht.

15. Zusammenbau eines Kupplungsausrücklagers nach einem der Ansprüche 2, 11, *dadurch gekennzeichnet*, daß die genannte Antriebslasche (64) axial vollständig in der Gesamtkontur des Entriegelungselements (46) enthalten ist.

16. Zusammenbau eines Kupplungsausrücklagers nach einem der Ansprüche 2, 11, *dadurch gekennzeichnet*, daß das Entriegelungselement (46) rundherum verteilt mehrere Antriebslaschen (64) aufweist.

17. Zusammenbau eines Kupplungsausrücklagers nach einem der Ansprüche 1 bis 16, *dadurch gekennzeichnet*, daß die Rille (47) des Antriebsstücks (25), worin das Entriegelungselement (46) axial beweglich angebracht ist, an der Wurzel derjenigen Flanke, zu der die Antriebsfläche (44) gehört, einen Absatz (76) aufweist, dessen Profil das wenigstens teilweise Eindringen des genannten Entriegelungselements (46) gestattet.

18. Zusammenbau eines Kupplungsausrücklagers nach Anspruch 17, *dadurch gekennzeichnet*, daß das Profil des genannten Absatzes (76) im wesentlichen dreieckig ist und das Antriebsstück (25) in Verbindung mit der freien Kante der Antriebsfläche (44) eine zylindrische Fläche (77) aufweist.

19. Zusammenbau eines Kupplungsausrücklagers nach einem der Ansprüche 1 bis 18, *dadurch gekennzeichnet*, daß die Flanke (58) der Halterille (43) des Kopplungsstücks (13), die der Antriebsfläche (44) gegenüberliegt, eine kegelstumpfförmige Fläche (59) aufweist, die sich zur Auflage des Verbindungsorgans (42) eignet, wenn dieses mit dem Entriegelungselement (46) in Eingriff steht, und deren Konizität so beschaffen ist, daß, wenn das genannte Entriegelungselement (46) an derjenigen der Flanken der Rille (47) des Kopplungsstücks (25) anschlägt, zu der die genannte Antriebsfläche (44) gehört, die Senkrechte (N) zur genannten kegelstumpfförmigen Fläche (59) entlang der Kontaktlinie zwischen dem Verbindungsorgan (42) und dieser in einem Abstand zu den dazugehörigen Eingriffsmitteln verläuft.

20. Zusammenbau eines Kupplungsausrücklagers nach Anspruch 19, *dadurch gekennzeichnet*, daß die genannte Senkrechte (N) ebenfalls in einem Abstand zu der Rille (47) des Antriebsstücks (25) verläuft, worin axial beweglich das Entriegelungselement (46) angebracht ist.

21. Zusammenbau eines Kupplungsausrücklagers nach einem der Ansprüche 19, 20, *dadurch gekennzeichnet*, daß die Flanke (58) der Halterille (43) des Kopplungsstücks (13), welches der Antriebsfläche (44) gegenüberliegt, eine weitere kegelstumpfförmige Fläche (60) mit geringerer Konizität als die vorgenannte aufweist, um die Auflage des Verbindungsorgans (42) zu ermöglichen, wenn dieses mit der genannten Antriebsfläche (44) in Eingriff steht.

22. Zusammenbau eines Kupplungsausrücklagers nach einem der Ansprüche 19 bis 21, *dadurch gekennzeichnet*, daß die Flanke (57) der Halterille (43), die axial der gleichen Seite zugewandt ist wie die Antriebsfläche (44), zu einem Stück (49) gehört, welches von dem Kopplungsstück (13) verschieden und fest damit verbunden ist.

23. Zusammenbau eines Kupplungsausrücklagers nach einem der Ansprüche 1 bis 22, *dadurch gekennzeichnet*, daß das freie Ende des Antriebsstücks (25) eine kegelstumpfförmige Eingriffsfläche (78) aufweist.

## Claims

1. A clutch actuating assembly, of the kind comprising, for coupling a clutch release head (10) to the releasing member (11) of a clutch, a member (13), hereinafter referred to for convenience as the main coupling member which is suitably carried on the said releasing member (11) tractive coupling means, which are arranged between the main coupling member (13) and a member (25), which is referred to hereinafter for convenience as the actuating member and which is a part of the clutch release head (10) are adapted to effect coupling between the said main coupling member (13) and actuating portion (25) in the axial direction defined from the releasing member (11) to the said clutch release head (10), the said tractive coupling means comprising, firstly an annular coupling member (42), which is resiliently deformable in the radial direction and which is at least partially engaged in the radial direction in an annular retaining groove (43) formed for the purpose of accommodating it in either one of the main coupling member (13) or actuating member (25), and secondly, a thrust surface (44), which is formed so as to extend generally transversely on the other one of the said members (25, 13) and with which the said annular coupling member (42) is adapted to cooperate in axial relationship by abutment in the said axial direction, the clutch actuating assembly being further of the kind comprising, for uncoupling the clutch release head (10) with respect to the releasing member (11) of the said clutch, an annular uncoupling member (46) which is mounted in a groove (47) for axial movement therein, the said groove (47) being formed in order to accommodate it in that one of the main coupling member (13) and actuating member (25) which has the said thrust surface (44) as a part of one of its flanks, characterised in that the annular coupling member (42) is carried by the main coupling member (13) and the said uncoupling member (46) is carried by the actuating member (25), the said uncoupling member (46) including engagement means adapted to allow it to be coupled releasably with the said annular coupling member (46), at least for the axial direction extending from the releasing member to the clutch release head, that is to say means whereby, when the annular coupling member (42) and the annular uncoupling member (46) are engaged with each other, one of these members lies to some extent within the other

2. A clutch actuating assembly according to Claim 1, *characterised in that* the said engagement means include at least one tang (64), referred to hereinafter for simple convenience as a drive tang, being part of the uncoupling member and extending axially while being resiliently deformable in a radial direction, and having a free end (65) which in the relaxed condition projects from the outer periphery of the said uncoupling member (46).

3. A clutch actuating assembly according to Claim 2, *characterised in that* the annular coupling member (42) is in the form of a ring, the drive tang (64) having, in the vicinity of its free end (65), a profile at least partly complementary to that of the said coupling member (42).

4. A clutch actuating assembly according to either one of Claims 2 and 3, *characterised in that*, spaced from the free end (65) of the drive tang, the uncoupling member (46) has a shoulder (70) which is directed in the axial direction towards the said free end.

5. A clutch actuating assembly according to any one or Claims 1 to 4, *characterised in that*, at its axial end disposed nearest to the thrust surface (44), the uncoupling member (46) has a frusto conical mating surface (62) on its outer periphery.

6. A clutch actuating assembly according to Claim 5, *characterised in that* the said frusto conical mating surface (62) is part of a portion of the uncoupling member (46) which is distinct from the drive tang (64) and which extends axially between the free end (65) of the said drive tang and the thrust surface (44).

7. A clutch actuating assembly according to Claim 5, *characterised in that* the said frusto conical mating surface (62) is formed on the free end (65) of the drive tang (64).

8. A clutch actuating assembly according to Claim 1, *characterised in that* the said engagement means comprise an annular groove (80) formed on the outer periphery of the uncoupling member (46).

9. A clutch actuating assembly according to Claim 8, *characterised in that* the annular groove (80) of the uncoupling member (46) has a profile in the axial direction at least partly complementary to that of the annular coupling member (42).

10. A clutch actuating assembly according to either one of Claims 8 and 9, *characterised in that* the uncoupling member (46) has a frusto conical mating surface (62) on its outer periphery at its end disposed in the axial sense nearest to the thrust surface (44).

11. A clutch actuating assembly according to any one of Claims 3 to 10, *characterised in that* the uncoupling member (46) has at least one tang (64), referred to hereinafter for simple convenience as a drive tang, which extends axially and is resiliently deformable in the radial direction, and of which the free end (65) projects radially from the outer periphery of the uncoupling member in its relaxed condition.

12. A clutch actuating assembly according to Claim 11, *characterised in that* the free end (65) of the said drive tang (64) is spaced axially away from the annular groove (80).

13. A clutch actuating assembly according to either one of Claims 2 and 11, *characterised in that* the free end (65) of the said drive tang (64) projects from the side of the annular groove (80) opposite to the thrust surface (44).

14. A clutch actuating assembly according to either one or Claims 2 and 11, *characterised in that* the said drive tang (64) is integral with the uncoupling member (46).

15. A clutch actuating assembly according to either one of Claims 2 and 11, *characterised in that* the said drive tang (64) lies entirely within the overall contour of the uncoupling member (46).

16. A clutch actuating assembly according to either one of Claims 2 and 11, *characterised in that* the uncoupling member (46) has a plurality of said drive tangs (64), spaced apart circumferentially.

17. A clutch actuating assembly according to any one or Claims 1 to 16, *characterised in that* the said groove (47), of the actuating member (25), in which the uncoupling member (46) is mounted for axial movement therein, has a recess (76) at the root of that one of its flanks which includes the said thrust surface (44), the profile of the said recess being adapted to allow the uncoupling member (46) to penetrate at least partly into it.

EP 0 224 393 B1

31

18. A clutch actuating assembly according to Claim 17, *characterised in that* the profile of the said recess (76) is generally triangular, and the said actuating member (25) has a cylindrical surface (77) joined to the free edge of the said thrust surface (44).

19. A clutch actuating assembly according to any one of Claims 1 to 18, *characterised in that* the flank (58) of the annular retaining groove (43) of the main coupling member (13) which is opposed to the said thrust surface (44) comprises a frusto conical thrust surface portion (59), the latter being adapted so that the annular coupling member (42) bears against it when the latter is in engagement with the uncoupling member (46), and having a cone angle such that, when the said uncoupling member (46) is in abutment against that one of the flanks of the groove (47) of the actuating member (25) that includes the said thrust surface (44), the normal (N) to the said frusto conical surface portion (59), along the line of contact between the annular coupling member (42) and the latter, is spaced away from the associated engagement means.

20. A clutch actuating assembly according to claim 19, characterised in that the said normal (N) is also spaced from the said groove (47) of the actuating member (25) in which the uncoupling member (46) is mounted for axial movement.

21. A clutch actuating assembly according to either one of Claims 19 and 29, *characterised in that* the flank (58) of the annular retaining groove (43) of the main coupling member (13) which is opposed to the said thrust surface (44) includes another frusto conical thrust surface portion (60), the cone angle of which is smaller than that of the first mentioned surface portion, for engagement of the annular coupling member (42) against it when the latter is in engagement with the said thrust surface (44).

22. A clutch actuating assembly according to any one of Claims 19 to 21, *characterised in that* the flank (57) of the annular retaining groove (43) which is orientated in the axial sense in the same direction as the said thrust surface (44), is part of a member (49) which is secured with respect to the main coupling member (13) but is not part of it.

23. A clutch actuating assembly according to any one of Claims 1 to 22, *characterised in that* the free end of the actuating member (25) includes a frusto conical engagement surface (78).

17

FIG.1

FIG.3

FIG.2

FIG.4A

FIG.4B

FIG.4C

FIG.4D

FIG.4E

FIG.4F

FIG.5A

FIG.5B

FIG.5C

FIG 5D

FIG.5E

# FIG.6

# FIG.7